# EUROPEAN PATENT SPECIFICATION

(11) **EP 2 441 798 B1**
(45) Date of publication and mention of the grant of the patent: **08.03.2017**
(21) Application number: 11183748.0
(22) Date of filing: 04.10.2011
(51) Int. Cl.: C08L 21/00, C08K 3/00, C08K 3/22, C08K 3/34, C08K 5/00, C08K 5/02, C08L 61/04, C08L 61/18

(54) **Activated resol cure rubber composition**
Aktivierte Resol-härtende Gummizusammensetzung
Composition de caoutchouc durci au résol activé

(30) Priority: 13.10.2010 EP 10187393
(43) Date of publication of application: 18.04.2012
(73) Proprietor: Lanxess Deutschland GmbH, 50569 Köln (DE)
(72) Inventor: Duin, Van Martin, 6134 AC Sittard (NL); Hough, Philip, 6127 AG Grevenbicht (NL)
(74) Representative: Siegers, Britta

(56) References cited:
- US-A- 2 726 224
- US-A- 3 036 986
- US-A- 3 277 209
- US-A- 3 597 377

## Description

The invention is related to a vulcanizable rubber composition comprising an elastomeric polymer, a phenol formaldehyde resin cross-linker, and an activator package.

The invention also relates to a process for the manufacture of a vulcanized article comprising the steps of preparing a vulcanizable composition, shaping, and vulcanizing the shaped vulcanizable rubber composition. The invention further relates to a vulcanized article.

Vulcanizable rubber compositions comprising an elastomeric polymer containing phenol formaldehyde resin cross-linker and an activator package are broadly applied in the industry as for example known from US 3,287,440.

A disadvantage of the rubber composition described in US 3,287,440 is that the therein described rubber compositions have a low cure rate marked by long vulcanization times at standard vulcanization temperatures of up to 170°C. A further disadvantage is a low state of cure apparent from the elevated permanent elongation of the obtained vulcanized articles.

A purpose of the invention is to provide a new vulcanizable rubber composition comprising phenol formaldehyde resin cross-linker and an activator package having improved cure rate and/or state of cure.

This objective is reached by a vulcanizable rubber composition comprising an activated zeolite.

Surprisingly the rubber composition according to the invention provides improved cure rate and/or state of cure.

Furthermore, the rubber composition according to the present invention results in an improved mechanical properties of the vulcanized article reflected in higher tensile strength and reduced compression set over a wide temperature range.

### Summary of the invention

The invention relates to a vulcanizable rubber composition comprising an elastomeric polymer, a phenol formaldehyde resin cross-linker, an activator package further comprising an activated zeolite.

### Details of the invention

The elastomeric polymer according to the present invention preferably contains double bond-containing rubbers designated as R rubbers according to DIN/ISO 1629. These rubbers have a double bond in the main chain and might contain double bonds in the side chain in addition to the unsaturated main chain.

They include, for example: Natural rubber (NR), Polyisoprene rubber (IR), Styrene-butadiene rubber (SBR), Polybutadiene rubber (BR), Nitrile rubber (NBR), Butyl rubber (IIR), Brominated isobutylene-isoprene copolymers with bromine contents of 0.1 to 10 wt. % (BIIR), Chlorinated isobutylene-isoprene copolymers with chlorine contents of 0.1 to 10 wt. % (CIIR), Hydrogenated or partially hydrogenated nitrile rubber (HNBR), Styrene-butadiene-acrylonitrile rubber (SNBR), Styrene-isoprene-butadiene rubber (SIBR)and Polychloroprene (CR) or mixtures thereof.

Elastomeric polymer should also be understood to include rubbers comprising a saturated main chain, which are designated as M rubbers according to ISO 1629 and might contain double bonds in the side chain in addition to the saturated main chain. These include for example ethylene propylene rubber EPDM, chlorinated polyethylene CM and chlorosulfonated rubber CSM.

The elastomeric polymer of the above mentioned type in the rubber composition according to the present invention can naturally be modified by further functional groups. In particular, elastomeric polymers that are functionalized by hydroxyl, carboxyl, anhydride, amino, amido and/or epoxy groups are more preferred. Functional groups can be introduced directly during polymerization by means of copolymerization with suitable co-monomers or after polymerization by means of polymer modification.

In a preferred embodiment of the invention, the elastomeric polymer comprises 1,1-disubstituted or 1,1,2-trisubstituted carbon-carbon double bonds. Such di- and trisubstituted structures react especially satisfactorily with a phenol formaldehyde resin cross-linker according to the invention.

The rubber composition can comprise a blend of more than one of the above defined elastomeric polymers.

The elastomeric polymer may have a Mooney viscosity (ML (1+4),125°C) in the range of, for example, 10 to 150 MU, or preferably 30 to 80 MU.

The rubber composition according to the invention may also comprise polymers other than the above described elastomeric polymer. Such polymers other than the elastomeric polymer include, polyethylene, polypropylene, acrylic polymer (e.g. poly(meta)acrylic acid alkyl ester, etc.), polyvinyl chloride, ethylene-vinyl acetate copolymers, polyvinyl acetate, polyamide, polyester, chlorinated polyethylene, urethane polymers, styrene polymers, silicone polymers, and epoxy resins.

These polymers other than the elastomeric polymer may be present alone or in combination of two or more kinds.

The ratio of the polymer other than the elastomeric polymer to the elastomeric polymer can be 1.0 or less, preferably 0.66 or less.

Preferred elastomeric polymers are copolymers of ethylene, one or more C₃ to C₂₃ α-olefins and a polyene monomer. Copolymers of ethylene, propylene and a polyene monomer are most preferred (EPDM). Other α-olefins suitable to form a copolymer include 1-butene, 1-pentene, 1-hexene, 1-octene and styrene, branched chain α -olefins such as 4-methylbutene-1,5-methylpent-1-ene, 6-methylhept-1-ene, or mixtures of said α-olefins.

The polyene monomer may be selected from non-conjugated dienes and trienes. The copolymerization of diene or triene monomers allows introduction of one or more unsaturated bonds.

The non-conjugated diene monomer preferably has from 5 to 14 carbon atoms. Preferably, the diene monomer is characterized by the presence of a vinyl or norbornene group in its structure and can include cyclic and bicyclo compounds. Representative diene monomers include 1,4-hexadiene, 1,4-cyclohexadiene, 1,5-hexadiene, 1,6-heptadiene, 1,7-octadiene, dicyclopentadiene, 5-ethylidene-2-norbornene, 5-vinyl-2-norbornene, 5-methylene-2-norbornene, 1,5-heptadiene, and 1,6-octadiene. The copolymer may comprise a mixture of more than one diene monomer. Preferred non-conjugated diene monomers for preparing a copolymer are 1,4-hexadiene (HD), dicyclopentadiene (DCPD), 5-ethylidene-2-norbornene (ENB) and 5-vinyl-2-norbornene (VNB).

The triene monomer will have at least two non-conjugated double bonds, and up to about 30 carbon atoms. Typical triene monomers useful in the copolymer of the invention are 1-isopropylidene-3,4,7,7-tetrahydroindene, 1-isopropylidenedicyclopentadiene, dihydro-isodicyclopentadiene, 2-(2-methylene-4-methyl-3-pentenyl) [2.2.1] bicyclo-5-heptene, 5,9-dimethyl-1,4,8-decatriene, 6,10-dimethyl-1,5,9-undecatriene, 4-ethylidene-6,7-dimethyl-1,6-octadiene, 7-methyl-1,6-octadiene and 3,4,8-trimethyl-1,4,7-nonatriene.

Ethylene-propylene or higher α-olefin copolymers may consist of from about 15 to 80 wt.% ethylene and from about 85 to 20 wt.% C₃ to C₂₃ α-olefin with the preferred weight ratio being from about 35 to 75 wt.% ethylene and from about 65 to 25 wt.% of a C₃ to C₂₃ α -olefin, with the more preferred ratio being from 45 to 70 wt.% ethylene and 55 to 30 wt.% C₃ to C₂₃ α-olefin. The level of polyene-derived units might be 0.01 to 20 wt.%, preferably 0.05 to 15 wt.%, or more preferably 0.1 to 10 wt.%.

Irrespective of the other components of the vulcanizable rubber composition, a low content of polyene derived units may cause surface shrinkage on the obtained vulcanized elastomeric composition. Conversely, a high content of polyene derived units may produce cracks in the vulcanized rubber composition.

Another preferred elastomeric polymer in the present invention is butyl rubber which is the type of synthetic rubber made by copolymerizing an iso-olefin with a minor proportion of a polyene having from 4 to 14 carbon atoms per molecule. The iso-olefins generally have from 4 to 7 carbon atoms, and such iso-olefins as isobutylene or ethyl methyl ethylene are preferred. The polyene usually is an aliphatic conjugated diolefin having from 4 to 6 carbon atoms, and is preferably isoprene or butadiene. Other suitable diolefins that may be mentioned are such compounds as piperylene; 2,3-dimethyl butadiene-1,3; 1,2-dimethyl butadiene-1,3; 1,3-dimethyl butadiene-1,3; 1-methyl butadiene-1,3 and 1,4-dimethyl butadiene-1,3. The butyl rubber contains only relatively small mounts of copolymerized diene, typically about 0.5 to 5%, and seldom more than 10%, on the total weight of the elastomer. For the sake of convenience and brevity, the various possible synthetic rubbers within this class will be designated generally by the term butyl rubber.

Further preferred elastomeric polymer in the present invention are especially natural rubber and its synthetic counterpart polyisoprene rubber.

The rubber composition of the present invention should not be understood as being limited to a single elastomeric polymer selected from the above mentioned or preferably described. The rubber composition can comprise a blend of more than one of the above defined elastomeric polymers. Such blends might represent homogeneous or heterogeneous mixtures of polymers where the phenolic resin cross-linker can act in one or more phases as well as act as a compatibilizing agent between the different polymeric phases. The vulcanizable rubber composition of the present invention preferably is characterized in that the elastomeric polymer is NR, BR, NBR, HNBR, SIBR, IIR, CR, EPDM, CM, CSM, CIIR, BIIR or IR or a mixture thereof.

The term phenol formaldehyde resin cross-linker, phenolic resin, resin cross-linker or resol have identical meanings within this application and denote a phenol and formaldehyde based condensation product used as curing agent.

Further are the terms cross-linking, curing and vulcanizing used with a singular meaning and are fully interchangeable words in the context of the present application, all expressing the thermosetting or fixation of a polymeric network by generation of covalent bonds between the rubber chains or its pedant groups.

The phenol formaldehyde resin cross-linker can be present in the composition according to the invention as such, or can be formed in the composition by an in-situ process from phenol and phenol derivatives with aldehydes and aldehyde derivatives. Suitable examples, of phenol derivatives include alkylated phenols, cresols, bisphenol A, resorcinol, melamine and formaldehyde, particularly in capped form as paraformaldehyde and as hexamethylene tetramine, as well as higher aldehydes, such as butyraldehyde, benzaldehyde, salicylaldehyde, acrolein, crotonaldehyde, acetaldehyde. glyoxilic acid, glyoxilic esters and glyoxal.

Resols based on alkylated phenol and/or resorcinol and formaldehyde are particularly suitable.

Examples of suitable phenolic resins are octyl-phenol formaldehyde curing resins. Commercial resins of this kind are for example Ribetak R7530E, delivered by Arkema, or SP1045, delivered by SG.

Good results are obtained if 0.5 - 20 parts of a phenolic resin are present per 100 parts of elastomeric polymer. Preferably 1 - 15 parts, more preferably 2 - 10 parts of phenolic resins are present. It is important that a sufficient amount of curing agent is present, so that the vulcanized article has good physical properties and is not sticky. If too much curing agent is present, the vulcanized composition according to the invention lacks elastic properties.

While the inherent cure rate of the phenolic resin as such might be sufficient for some applications, commercial practical elastomeric compositions will further comprise an activator package comprising one or more accelerators or catalysts to work in conjunction with the phenolic resin. The primary function of an accelerator in a rubber composition is to increase the rate of curing. Such agents may also affect the cross-lining density and corresponding physical properties of the vulcanized rubber composition so that any accelerator additive should tend to improve such properties.

In a preferred embodiment of the invention the activator package comprises a metal halide.

The metal halide accelerators of the invention are exemplified by such known stable acidic halides as tin chloride, zinc chloride, aluminum chloride and, in general, halides of the various metals of group 3 or higher of the periodic system of elements. This class includes, inter alia, ferrous chloride, chromium chloride and nickel chloride, as well as cobalt chloride, manganese chloride and copper chloride. The metal chlorides constitute a preferred class of accelerators in the composition of the invention. However, acceleration is obtainable with metal salts of other halides such as aluminum bromide and stannic iodide. Metal fluorides such as aluminum fluoride can accelerate, although aluminum fluoride is not particularly desirable. Of the metal chlorides, the most preferred are those of tin, zinc and aluminum.

The heavy metal halides are effective independently of the state of oxidation of the metal, and they are even effective if the halide is partially hydrolyzed, or is only a partial halide, as in zinc oxychloride.

In order to improve the preparation of the rubber composition, it is desirable that the metal halide is further coordinated with complexating agents such as water, alcohols and ethers. Such complexated metal halides have improved solubility and dispersability in the rubber compositions.

In another preferred embodiment of the invention the activator package comprises a halogenated organic compound.

Suitable halogenated organic compounds are those compounds from which hydrogen halide is split off in the presence of a metal compound. Halogenated organic compounds include, for example, polymers or copolymers of vinyl chloride and/or vinylidene chloride other polymerizable compounds, halogen containing plastics, for example polychloroprene; halogenated, for example chlorinated or brominated butyl rubber; halogenated or chlorosulphonated products of high-density or low-density polyethylene or higher polyolefins; colloidal mixtures of polyvinyl chloride with an acrylonitrile-butadiene copolymer; halogenated hydrocarbons containing halogen atoms which may be split off or which may split off hydrogen halide, for example liquid or solid chlorination products of paraffinic hydrocarbons of natural or synthetic origin; halogen containing factice, chlorinated acetic acids; acid halides, for example lauroyl, oleyl, stearyl or benzoyl chlorides or bromides, or compounds such as for example N-bromosuccinimide or N-bromo-phthalimide.

In another preferred embodiment of the invention the phenol formaldehyde resin is halogenated. Such halogenated resin represents the combined functionality of above phenolic resin and above halogenated organic compound. Preferred are brominated phenolic resins. A Commercial resin of this kind is for example SP1055 (delivered by SG).

In one embodiment of the invention the activator package further comprises a heavy metal oxide. In the context of the present invention a heavy metal is considered to be a metal with an atomic weight of at least 46 g/mol. Preferably the heavy metal oxide is zinc oxide, lead oxide or stannous oxide.

Such heavy metal oxide is recognized to be especially useful in combination with the above mentioned halogenated organic compound and/or halogenated phenolic resin. A further advantage described in the experiments of the present application is the moderation of the cure rate, e.g. scorch retardant, and the stabilization of the vulcanized compounds against thermal aging.

An advantage of the heavy metal oxide in the composition according to the present invention is an improved heat aging performance of the vulcanized rubber composition reflected by the retention of tensile properties after heat aging.

Good results are obtained with from 0.5 - 10.0 parts of heavy metal oxide per 100 parts of elastomeric polymer. Preferably with 0.5 - 5.0, more preferably with 1 - 2 parts of heavy metal oxide. It is important to use a sufficient amount of heavy metal oxide, so to achieve an acceptable scorch time and good thermal stability of the vulcanized compound. If too much heavy metal oxide is used the cure rate will substantially deteriorate.

In the context of the present application, the terminology activated zeolite reflects that the zeolite is characterized in that the pores are substantially free of readily adsorbed molecules. Typical examples for such readily absorbed molecules are low molecular weight polar compounds or hydrocarbons. Adsorption of such molecules will result in a deactivated zeolite.

An activated zeolite is obtained by subjection to a temperature and/or low pressure treatment such to substantially decompose and/or remove components from its pores. In a preferred embodiment activated zeolite is obtained by subjection to a temperature and low pressure treatment, in particular by treating a zeolite at least 8 hours, preferably at least 12 hours, in particular at least 24 hours at a temperature of at least 170°C at a pressure of less than 300 mm Hg, in particular less than 50 mm Hg, preferably less than 15 mm. An activated zeolite with a good activity can be obtained by a treatment of a commercially available zeolite, in particular a zeolite 5A in powder form at 180 °C and 10 mm Hg for 48 hours. A treatment may also consist of storing the zeolite for a period of 24 hours at 200°C and at reduced pressure, whereby the preferred pressure is identified by the above given ranges. Such activation process of zeolites is well known to the person skilled in the art for producing a zeolite suited as a drying agent.

Deactivation of the zeolite may proceed by diffusion of compounds such as for example water, hydrocarbons, acids or bases into the pores of the zeolite and driving out the potentially present inert gasses such as for example oxygen and nitrogen present from the activation process.

Deliberate deactivation of the zeolite is for example known from the temporary or permanent immobilization of catalysts in which case the zeolite assumes the role of a carrier material. Accidental deactivation of the zeolite will take place if the activated zeolite is exposed to the environment from which it will absorb moisture and/or other compounds. It should be recognized that unintended deactivation by moisture is difficult to avoid in a rubber processing environment where the composition of the present invention is mainly used and, in consequence, a significant deactivation of the activated zeolite especially by moisture is considered to fall under the scope of the present invention. Such deactivation of the zeolite comprised in the composition according to the invention by moisture might reach levels of 75%, preferably less than 50%, more preferably less than 25% of the maximum moisture deactivation under ambient conditions. Whereas moisture deactivation might be tolerated to a large extent the loading of the activated zeolite comprised in the composition of the present invention by compounds other than water is less than 5 wt%, preferably less than 3 wt%, more preferably less than 1 wt% compared to the activated zeolite.

Deactivation of the activated zeolite by other compounds than water is believed to negatively impact the contemplated effect of the present invention, being a higher rate of cure and state of cure due to a reduction of absorption capacity of the zeolite combined with the potential contamination of the composition by the degassing of compounds, from which water is obviously least detrimental.

US 3,036,986 describes a method for accelerating the curing reaction of a butyl rubber formulation by use of a strong acid. Said strong acid is introduced into the formulation while contained within the pores of a crystalline, zeolitic molecular sieve adsorbent at loading levels of at least 5%.

The zeolites of the present invention are those natural and synthetic crystalline alumina-silicate microporous materials having a three-dimensional porous structure. These zeolites are clearly distinguishable by their chemical composition and crystalline structure as determined by X-ray diffraction patterns.

Due to the presence of alumina, zeolites exhibit a negatively charged framework, which is counter-balanced by positive cations. These cations can be exchanged affecting pore size and adsorption characteristics. Examples are the potassium, sodium and calcium forms of zeolite A types having pore openings of approximately 3, 4 and 5 Ångstrom respectively. Consequently they are called Zeolite 3A, 4A and 5A. The metal cation might also be ion exchanged with protons.

Further not limiting examples of synthetic zeolites are the zeolite X and zeolite Y. Not limiting examples for naturally occurring zeolites are mordenite, faujasite and erionite.

The rubber composition of the present invention may further comprise at least one cross-linking agent different from the phenol formaldehyde resin.

A cross-linking agent different from the phenol formaldehyde resin may include, for example, sulfur, sulfur compounds e.g. 4,4'-dithiomorpholine; organic peroxides e.g. dicumyl peroxide; nitroso compounds e.g. p-dinitrosobenzene, bisazides and polyhydrosilanes. One or more cross-linking accelerators and/or coagents can be present to assist the cross-linking agents, o. Preferred are sulfur in combination with accelerators or organic peroxides in combination with coagents.

The presence of a further cross-linking agent may result in an improved state of cure of the rubber compound and improved vulcanized polymer properties. Such improvement may originate from a synergistic effect of the cross-linking agents, a dual network formation by each individual cross-linking agent or the cure incompatibility of a rubber phase in the case of a rubber blend.

In a preferred embodiment of the invention the elastomer composition comprises at least one compound selected from the group consisting of processing aid, blowing agent, filler, softening agent and stabilizer or a combination thereof.

The processing aid include, for example, stearic acid and its derivatives. These processing aids may be used alone or in combination of two or more kinds. The amount of the processing aid is in the range of, for example, 0.1 to 20 phr, or preferably 1 to 10 phr.

The blowing agent includes organic blowing agents and inorganic blowing agents. Organic blowing agents include, azo blowing agents, such as azodicarbonamide (ADCA), barium azodicarboxylate, azobisisobutyronitrile (AIBN), azocyclohexylnitrile, and azodiaminobenzene; N-nitroso foaming agents, such as N,N'-dinitrosopentamethylenetetramine (DTP), N,N'-dimethyl-N,N'-dinitroso terephthalamide, and trinitrosotrimethyltriamine; hydrazide foaming agents, such as 4,4'-oxybis(benzenesulphonyl hydrazide) (OBSH), paratoluene sulfonylhydrazide, diphenyl sulfone-3,3'-disulfanylhydrazide, 2,4-toluene disulfonylhydrazide, p,p-bis(benzenesulfonyl hydrazide) ether, benzene-1,3-disulfonylhydrazide, and allylbis(sulfonylhydrazide);semicarbazide foaming agents, such as p-toluylenesulfonyl semicarbazide and 4,4'-oxybis(benzenesulfonyl semicarbazide); fluoroalkane foaming agents, such as trichloromonofluoromethane and dichloromonofluoromethane; triazole foaming agents, such as 5-morphoyl-1,2,3,4-thiatriazole; and other known organic foaming agents. The organic foaming agents also include thermally expansible microparticles containing microcapsules in which thermally expansive material is encapsulated. The inorganic foaming agents include, for example, hydrogencarbonate, such as sodium hydrogencarbonate and ammonium hydrogencarbonate; carbonate, such as sodium carbonate and ammonium carbonate; nitrite, such as sodium nitrite and ammonium nitrite; boron hydride salts, such as sodium borohydride; azides; and other known inorganic foaming agents. These foaming agents may be present alone or in combination of two or more kinds.

The amount of the additional blowing agent is in the range of 0 to 20 phr.

The fillers include, for example, carbon black, carbon nano tubes, inorganic fillers, such as calcium carbonate, magnesium carbonate, calcium hydroxide, magnesium hydroxide, aluminium hydroxide, silicic acid and salts thereof, clay, nano clays, talc, mica powder, bentonite, silica, alumina, aluminium silicate, acetylene black, and aluminium powder; organic fillers, such as cork, cellulose and other known fillers. These fillers may be used alone or in combination of two or more kinds. The amount of the filler is in the range of 10 to 300 phr, preferably 50 to 200 phr, or more preferably 100 to 200 phr.

The softening agents include petroleum oils (e.g. paraffin-based process oil (paraffin oil, etc.), naphthene-based process oil, drying oils or animal and vegetable oils (e.g. linseed oil, etc.), aromatic process oil, etc.), asphalt, low molecular weight polymers, organic acid esters (e.g. phthalic ester (e.g. di-2-octyl phthalate (DOP), dibutyl phthalate (DBP)), phosphate, higher fatty acid ester, alkyl sulfonate ester, etc.), and thickeners. Preferably petroleum oils, or more preferably paraffin-based process oil is used. These softening agents may be used alone or in combination of two or more kinds. The amount of the softening agent is in the range of 10 to 200 phr, or preferably 20 to 100 phr.

The stabilizers include fire retardant, anti-aging agent, heat stabilizer, antioxidant and anti-ozonant. These stabilizers may be present alone or in combination of two or more kinds. The amount of the stabilizer is in the range of 0.5 to 20 phr, or preferably 2 to 5 phr.

Further, depending on the purpose and application, the elastomeric composition can contain waxes, tackifiers, desiccants, adhesives and coloring agents within the range of not affecting the excellent effect of the activated zeolite.

One embodiment of the invention relates to a process for the manufacture of a vulcanized article comprising the steps of preparing a vulcanizable rubber composition, shaping the vulcanizable rubber composition and vulcanizing the shaped rubber composition.

The rubber composition comprising the activated zeolite, can be prepared in the form of admixture by properly mixing above-mentioned components and kneading the mixture. In a preferred embodiment, the mixing process is performed in an internal mixer, in an extruder or on a mill.

During kneading, the mixture may also be heated. Preferably, mixing is performed by first kneading components other than additive components to be added in small amounts, such as, for example, cross-linking agents, blowing agents, accelerators and then adding these additive components to the kneaded mixture. Whereas the addition of the additive components can be done on the same mixing equipment, the cooling of the pre-mix and addition of additive components is easily performed on a second mixing device such as a 2-roll mill. Such use of a second mixing device is advantageous considering that the additive components are often heat sensitive and can thus be mixed to the composition at a lower temperature.

The elastomeric composition prepared according to the invention can be recovered from the mixing process in bulk or shaped in the form of sheets, slabs or pellets. The shaping of the elastomeric composition can take place after mixing, as an individual shaping step, ahead the vulcanization process or during the vulcanization process.

In a preferred embodiment, the shaping of the elastomer composition is performed by extrusion, calendaring, compression molding, transfer molding or injection molding.

The elastomeric composition thus prepared is heated to a temperature at which the curing process takes place, so that a cross-linked rubber composition is obtained. A characteristic of the present invention is that the presence of an activated zeolite allows a reduction of the temperature at which the curing process takes place, resulting in a more economical process. Further will the lower vulcanization temperature result in less deterioration of the vulcanized rubber composition.

In a preferred embodiment the curing of the rubber composition is performed in a steam autoclave, an infra red heater tunnel, a microwave tunnel, a hot air tunnel, a salt bath, a fluidized bed, a mold or any combination thereof.

An advantage of the present invention is that the vulcanization time of the vulcanizable rubber composition comprising a phenol formaldehyde resin cross-linker is between 5 seconds and 30 minutes and the vulcanization temperature is in the range between 120 and 250°C. More preferably the vulcanization time is between 15 seconds and 15 minutes and the vulcanization temperature is in the range between 140 and 240°C. Most preferably the vulcanization time is between 1 and 10 minutes and the vulcanization temperature is in the range between 160 and 220°C.

The curing processes can be performed in any equipment that is known and suitable for curing of a rubber composition. This can be done either in a static process, as well as in a dynamic process. In the first case, mention can be made to curing in a predetermined shape, or thermoforming, by the use of a heated shape.

Preferably, the dynamic process comprises a shaping e.g. by extrusion continuously feeding the shaped rubber composition to a curing section (e.g. hot air tunnel). When an extruder is used for the shaping of the rubber composition, the temperature should be carefully controlled in order to prevent premature vulcanization e.g. scorch. The mixture is then heated to conditions where the rubber composition is vulcanized.

Optionally the cured composition is subjected to a post cure treatment that further extends the vulcanization time.

The method for curing the rubber composition is not particularly limited to the above processes. Alternatively the composition can be shaped into a sheet using a calender, or the like, and then be cured in a steam autoclave. Alternatively, the rubber composition can be formed into a complex shape, such as an uneven shape, by injection molding, press forming, or other forming method, and then be cured.

The activated zeolite might be added to the composition in form of fine powders or as an aggregated dispersible particles.

To achieve the good dispersion of the activated zeolite, the zeolite must be in the form of fine, small, dispersible particles that might be aggregated into larger agglomerates or processed into pellets. Generally the dispersed particle size is in the range of 0.01-100 µm and more preferably the zeolite has a particle size below 50 µm. This results in a large number of well dispersed sites within the rubber composition providing the highest effect in increasing cure rate of the rubber composition and will not negatively affect surface quality of the shaped and vulcanized article.

The amount of activated zeolite used in the process according to the invention depends on the required cure rate increasing effect, but also on the type of zeolite used, its pore size and level of deactivation. Preferably the level of activated zeolite is in the range of 0.1 to 20 part per hundred rubber, more preferably between 0.5 and 15 phr and most preferred between 1 and 10 phr.

A particular advantage of the present invention is that a pressure-less cure can be applied to the vulcanizable rubber compound comprising an activated zeolite. Such pressure-less cure is often are characterized by an unwanted liberation of gasses during the curing process resulting in porosity within the cured article and surface defects. The vulcanized rubber compounds of the present invention are characterized by low porosity and good surface quality.

A particular advantage of the present invention concerns the rubber composition where the elastomeric polymer is an EPDM. EPDM compositions are commonly cross-linked by sulfur or peroxide. The increased cure rate achieved by the present invention raises the cure rate of phenolic resins to the same level of activity as sulphur and peroxide cures while providing the advantages of resin cure to EPDM compositions, namely good high temperature resistance of the vulcanizate and oxygen inertness during the curing process.

The invention also relates to a vulcanized article, prepared by the process according to the present invention. Characteristics of a vulcanized article according to the present invention are low compression sets at both low (-25°C) and high (150°C) temperatures and high tensile strength. Another characteristic is the good heat aging stability of the vulcanized material expressed by only limited deterioration of the tensile properties upon prolonged temperature treatment.

Typical applications for a vulcanized article according to the present invention are in the automotive segment, e.g. exhaust hangers, front light seals, air hoses, sealing profiles, engine mounts, in the building and construction segment, e.g. seals building profiles and rubber sheeting and in general rubber goods, e.g. conveyor belts, rollers, chemical linings and textile reinforced flexible fabrications.

### Examples and Comparative Experiments

### General procedure

The compositions of examples and comparative experiments were prepared using an internal mixer with a 3 liter capacity (Shaw K1 Mark IV Intermix) having intermeshing rotor blades and with a starting temperature of 25°C. The elastomeric polymer was first introduced to the mixer and allowed to crumble for a period of 30 seconds before the carbon black, white filler and oil were added. Mixing was allowed to proceed until a mix temperature of 70°C was achieved, when the remaining ingredients were added. Mixing was allowed to proceed until a mix temperature of 95°C was achieved, when the batches were transferred to a two roll mill (Troester WNU 2) for cooling, and blending to achieve a high level of ingredient dispersion.

Analysis of cure rheology was carried out using a moving die rheometer (MDR2000E) with test conditions of 20 minutes at 180°C. The cure characteristics are expressed in ML, MH, ΔS (= MH - ML), ts2 and t'c(90), according to ISO 6502:1999.

Test pieces were prepared by curing at 180°C using a curing time equivalent to twice t'c90 as determined by MDR rheology testing.

The test pieces were used to determine physical properties reported in the tables.

If not mentioned otherwise, the standard procedures and test conditions were used for Hardness (ISO 7619-1:2004), Tensile strength (ISO 37:2005 via dumb-bell type 2), Tear strength (ISO 34-1:2010), Hot air aging (ISO 188:2007), Compression set (ISO 815-1:2008) and Mooney (ISO 289-1:2005).
The activated zeolite as used in the following examples was obtained by the treating zeolite 5A in powder form in a vacuum oven for 48 hours at a temperature of 180°C and a pressure of about 10 mm Hg.

Compositions and results of examples and comparative experiments are given in tables 1-6.

Comparative experiment A shows the low cure rate of a phenol formaldehyde cross-linker resin composition expressed in a high cure time to reach 90% of the maximum cure [t'c(90)] of more than 10 minutes. Comparative Experiments B and C are indicative for commercially applicable peroxide and sulfur cross-linker compositions. Example 1 shows the strong increase of cure rate achieved in form of a substantial reduction of t'c(90) to less than 2 minutes by the addition of 10 phr of activated zeolite 5A to the composition, outperforming the peroxide based composition from Comparative Experiment B.

An advantage of the present invention is its positive effect on pressureless curing with limited or no porosity in the cured samples. Here for the EPDM compositions of Comparative Experiment D and Example 2 were extruded using a cold feed extruder with a 45 mm screw diameter to form tubes with an inside diameter of 8 mm and an outside diameter of 20 mm. The extruded tubes were cut to 10 cm lengths, then suspended in a circulating hot air oven at 180°C for curing times equivalent to 4 times t'c90 as determined from MDR 2000 rheometer test data. Density measurements were taken from the cured tubes. Results as reported in Table 2 indicate the less porous vulcanized rubber composition of Example 2 in form of a higher density compared to Comparative Experiment D.

A preferred embodiment of the invention is the combined use of zinc oxide and activated zeolite. The presence of zinc oxide in the composition of the present invention improves heat aging performance of the resin cured EPDM above a typical level, particularly with respect to tensile properties. Zinc oxide in resin cured EPDM is known to act as an effective cure modifier to slow down the rate of cure for improved processing safety, but the resulting reduction in final cross-link density adversely affects compression set (Comparative Experiments D versus E). Despite this, it can be seen that retained tensile properties after heat aging are improved by the presence of zinc oxide, when compared to resin cured EPDM without the addition of zinc oxide. The use of zeolite (Example 2) has little affect on compression set and as with the use of zinc oxide, also gives an improvement to retained tensile properties after heat aging.

In Example 3 zinc oxide and activated zeolite are used in combination, resulting in a greater than additive effect as can be seen on the retained tensile properties after heat aging when comparing properties of Example 2 and Example 3.

The Comparative Experiments F and G and the Example 3 allow to compare physical properties and heat aging resistance of peroxide and sulfur cured compositions against resin cured composition according to the present invention containing zinc oxide. It is shown that Example 3 outperforms the one or both reference compositions on many relevant characteristics such as Compression set, stability of tensile strength and hardness after heat aging.

**Table 1**

| Example / Comparative Experiment | | Comp. Exp. A | Comp. Exp. B | Comp. Exp. C | Example 1 |
|---|---|---|---|---|---|
| EPDM KELTAN 8340A | | 100 | 100 | 100 | 100 |
| Carbon black | | 130 | 130 | 130 | 130 |
| White filler | | 35 | 35 | 35 | 35 |
| Mineral Oil | | 70 | 70 | 70 | 70 |
| Activated Zeolite 5A | | | | | 10 |
| CaO | | | 10 | 10 | |
| ZnO | | | | 8 | |
| Stearic acid | | | 0.5 | 1 | |
| | | | | | |
| Peroxide (Perkadox 14-40 MB) | | | 6 | | |
| | | | | | |
| Peroxide cure package ²⁾ | | | 5 | | |
| | | | | | |
| S-Cure package ¹⁾ | | | | 6.7 | |
| Sulfur (S-80) | | | | 0.8 | |
| Resin SP-1045 | | 10 | | | 10 |
| SnCl2.2H2O | | 1.5 | | | 1.5 |
| *Total lab* | *phr* | *346.5* | *356.5* | *361.5* | *356.5* |

| | | | | | |
|---|---|---|---|---|---|
| ¹⁾ Mixture of DGP-80 (diphenyl guanidine) = 0.5; TBBS (N-t,butyl-2-benzothiazolesulfenamide = 0.5; CBS-80% (cyclohexylbenzothiazole sulfenamide) = 1.4; ZDEC-80 (zinc diethyldithio carbamate) = 2.3; ZDBP-50 (zinc dibutyl dithiophosphate) = 2.0; ²⁾ Peroxide Cure package = Peroxide (Trigonox 29-40 MB) = 3.0 and TMPT-50 = 2.0) | | | | | |

**Table 2**

| (Rheometer MDR2000E) | | Comp. A | Comp. B | Comp. C | Example 1 |
|---|---|---|---|---|---|
| Test temp. | [C] | 180 | 180 | 180 | 180 |
| Test time | [min] | 20 | 20 | 20 | 20 |
| ML | [dNm] | 3.35 | 2.57 | 1.84 | 4.64 |
| MH | [dNm] | 18.24 | 17.71 | 14.8 | 25.57 |
| ΔS | [dNm] | 14.89 | 15.14 | 12.96 | 20.93 |
| ts2 | [min] | 0.41 | 0.3 | 0.7 | 0.18 |
| t'c(90) | [min] | 10.21 | 3.29 | 1.53 | 1.97 |
| Cure time 2 x t'c90 | [min] | 20.42 | 6.58 | 3.06 | 3.94 |

**Table 3**

| Properties | Units | Comp. A | Comp. B | Comp. C | Example 1 |
|---|---|---|---|---|---|
| Hardness | [ShoreA] | 66.5 | 70.6 | 67.3 | 71.4 |
| Hardness after Hot Air Aging 1 week @ 150°C | [ShoreA] | 83.7 | 79.9 | 86 | 83.3 |
| Tensile Strength | [MPa] | 8.6 | 12.4 | 12.2 | 14.1 |
| Modulus @ 100% | [MPa] | 3.5 | 4.4 | 3.3 | 6 |
| Modulus 300% | [MPa] | n.a. | n.a. | 8.7 | n.a. |
| Elongation | [%] | 278 | 253 | 468 | 232 |
| T.S. after Hot Air Aging 1 week @ 150°C | | | | | |
| T.S. | [MPa] | 12.6 | 8.7 | 12.4 | 12.3 |
| M 100 | [MPa] | 12.1 | 6.3 | n.a. | n.a. |
| M 300 | [MPa] | n.a. | n.a. | n.a. | n.a. |
| Elongation | [%] | 106 | 168 | 96 | 83 |
| Compression set (ISO / DIN Type B) | | | | | |
| Test time | [hr] | 72 | 72 | 72 | 72 |
| Test temp. | [C] | 23 | 23 | 23 | 23 |
| CS Median | [%] | 16 | 9.2 | 9 | 6.2 |
| Compression set (ISO / DIN Type B) | | | | | |
| Test time | [hr] | 24 | 24 | 24 | 24 |
| Test temp. | [C] | 100 | 100 | 100 | 100 |
| CS Median | [%] | 95.6 | 74.8 | 126.5 | 75 |
| Tear strength (Crescent Nick.) | [KN/m] | 27.6 | 26.1 | 40.8 | 29.5 |
| Tear str. Hot Air Aged 1 week @ 150°C | [KN/m] | 21 | 27.7 | 22.2 | 21 |

**Table 4**

| Example / Comp. Experiment | | Comp. D | Comp. E | Comp. F | Comp. G | Example 2 | Example 3 |
|---|---|---|---|---|---|---|---|
| EPDM KELTAN 8340A | | 100 | 100 | 100 | 100 | 100 | 100 |
| Carbon black | | 70 | 70 | 70 | 70 | 70 | 70 |
| White filler | | 30 | 30 | 30 | 30 | 30 | 30 |
| Mineral Oil | | 85 | 85 | 85 | 85 | 85 | 85 |
| Activated Zeolite 5A | | | | | | 10 | 10 |
| CaO | | | | 10 | 10 | | |
| ZnO | | | 2 | | 8 | | 2 |
| Stearic acid | | | | 0.5 | 1 | | |
| Perkadox 14-40 MB | | | | 6 | | | |
| Peroxide cure package²⁾ | | | | 5 | | | |
| S-cure package¹⁾ | | | | | 6.7 | | |
| Sulfur (S-80) | | | | | 0.8 | | |
| Resin SP-1045 | | 10 | 10 | | | 10 | 10 |
| SnCl2.2H2O | | 1.5 | 1.5 | | | 1.5 | 1.5 |
| *Total lab* | *phr* | *296.5* | *298.5* | *306.5* | *311.5* | *306.5* | *308.5* |

| | | | | | | | |
|---|---|---|---|---|---|---|---|
| ¹⁾ and ²⁾ see table 1 | | | | | | | |

**Table 5**

| Rheometer (MDR2000E) | | Comp. D | Comp. E | Comp. F | Comp. G | Example 2 | Example 3 |
|---|---|---|---|---|---|---|---|
| Test temp. | [°C] | 180 | 180 | 180 | 180 | 180 | 180 |
| Test time | [min] | 20 | 20 | 20 | 20 | 20 | 20 |
| ML | [dNm] | 1.09 | 0.75 | 0.8 | 0.57 | 1.42 | 1.39 |
| MH | [dNm] | 13.82 | 8.98 | 7.82 | 8.11 | 13.06 | 11.84 |
| ΔS | [dNm] | 12.73 | 8.23 | 7.02 | 7.54 | 11.64 | 10.45 |
| ts2 | [min] | 0.4 | 0.96 | 0.47 | 1.12 | 0.24 | 0.26 |
| t'c(90) | [min] | 9.93 | 10.99 | 4.07 | 2.19 | 2.73 | 3.21 |
| Cure time 2 x t90 | [min] | 19.86 | 21.98 | 8.14 | 4.38 | 5.46 | 6.42 |

**Table 6**

| Properties | | Comp. D | Comp. E | Comp. F | Comp. G | Example 2 | Example 3 |
|---|---|---|---|---|---|---|---|
| Hardness [ShoreA] | | 56.7 | 48.1 | 45.2 | 45.8 | 54.4 | 53.2 |
| Hardness after Hot Air Aging 1 week @ 150°C | | 60.2 | 59.6 | 47.7 | 61.2 | 60.4 | 60.8 |
| Hardness after Hot Air Aging 48 hours @ 175°C | | 61.3 | 57.6 | 46.1 | 58 | 58 | 58.3 |
| Hardness after Hot Air Aging 1 week @ 175°C | | 70.6 | 64.5 | 51.8 | 64.9 | 64 | 65 |
| Compression set (ISO / DIN Type B) | | | | | | | |
| 72h, 23°C | [%] | 2 | 7 | 10 | 8 | 4 | 5 |
| 24h, 100°C | [%] | 5.8 | 23.8 | 11.8 | 55.4 | 8.3 | 12.5 |
| 24h, 150°C | [%] | 23.6 | 60.1 | 17.3 | 86.3 | 22.4 | 31.3 |
| 24h, -25°C | [%] | 35.7 | 59.1 | 64.5 | 64.7 | 38.4 | 45.4 |
| Tensile Strength | [MPa] | 11.7 | 13.2 | 11.3 | 12.8 | 11.1 | 10.7 |
| Modulus 100% | [MPa] | 3.4 | 2 | 1.5 | 1.4 | 3.4 | 2.8 |
| Modulus 300% | [MPa] | n.a. | 7.3 | 5.2 | 4 | 11.1 | 9.3 |
| Elongation | [%] | 260 | 491 | 531 | 716 | 291 | 340 |
| Tensile after Hot AirAging 1 week @ 150°C | [MPa] | 5.7 | 8.9 | 7.4 | 9.4 | 9.3 | 11.2 |
| Modulus 100% | [MPa] | 5.1 | 3.9 | 1.7 | 4.3 | 5.4 | 4.5 |
| Modulus 300% | [MPa] | n.a. | 11.4 | 4.9 | n.a. | n.a. | n.a. |
| Elongation | [%] | 109 | 233 | 454 | 223 | 175 | 262 |
| Tensile after Hot AirAging 48 hours @ 175°C | [MPa] | 4 | 9 | 4.3 | 7.9 | 8.9 | 10 |
| M 100 | [MPa] | n.a. | 4 | 1.6 | 3.8 | 4.7 | 4.3 |
| M 300 | [MPa] | n.a. | n.a. | 4.1 | n.a. | n.a. | n.a. |
| Elongation | [%] | 86 | 236 | 341 | 219 | 182 | 252 |

| Properties | | Comp. D | Comp. E | Comp. F | Comp. G | Example 2 | Example 3 |
|---|---|---|---|---|---|---|---|
| Tensile after Hot AirAging 1 week @ 175°C | [MPa] | 2.6 | 7.1 | 2.6 | 5.4 | 5.5 | 8.3 |
| M 100 | [MPa] | n.a. | 6.2 | n.a. | n.a. | n.a. | 7.4 |
| M 300 | [MPa] | n.a. | n.a. | n.a. | n.a. | n.a. | n.a. |
| Elongation | [%] | 23 | 124 | 51 | 60 | 54 | 116 |
| Tear Strength (Angle Nicked) | [KN/m] | n.a. | n.a. | 14.4 | 15.6 | n.a. | 10.8 |
| after Hot Air Aging 1 week @ 150°C | [KN/m] | n.a. | n.a. | 15.8 | 8.2 | n.a. | 9.3 |
| after Hot Air Aging 48 hours @ 175°C | [KN/m] | n.a. | n.a. | 15.4 | 8.2 | n.a. | 9 |
| after Hot Air Aging 1 week @ 175°C | [KN/m] | n.a. | n.a. | 7.9 | 6.3 | n.a. | 7.6 |
| Density | [Kg/m³] | 932.4 | | | | 1002.6 | |

The present invention can also be usefully applied to formulations based on a range of other elastomer types.

Comparative Experiment H shows a low cure activity for a butyl based compound, having a long scorch time [ts2] and cure time [t'c(90) and a low final cross-link density (ΔS). In Example 4 activated zeolite 5A is used resulting in a substantial decrease in ts2 and t'c(90), and a large increase in ΔS. Comparative Experiment I shows that chlorobutyl rubber exhibits a much faster cure profile than seen for butyl rubber in Comparative Experiment H, and required no addition of a separate halogen donor, relying instead on halogen donation from the chlorobutyl rubber. The addition of activated zeolite to the chlorobutyl compound in Example 5 leads to a more active cure with reduced ts2 and t'c(90) and an increased ΔS.

Comparative Experiments J and K show the cure characteristics for compounds based on natural rubber and SBR 1500 respectively. Examples 6 and 7 demonstrate that for both these polymers the addition of activated zeolite 5A causes a reduction in ts2 and t'c(90), and increases ΔS.

Comparative Experiments L and M shows respectively that good cure characteristics can be achieved when using resol cure systems in HNBR and NBR based compounds. Comparative Experiments 8 and 9 demonstrates respectively that for both HNBR and NBR the curing activity can be increased by the use of activated zeolite 5A.

The use of a resol cure system in a polychloroprene based compound is shown in Comparative Experiments N. Halogen donation for cure activation came from the polychloroprene that the compound was based on. Example 10 shows that the addition of activated zeolite 5A gives a substantially faster cure rate and a subsequent reduction to t'c(90). Maximum torque (MH) was increased leading to a higher ΔS.

Example 13 refers to an experiment in the absence of SnCl₂.2H₂O with a dried, modified zeolite 5A to demonstrate whether the cure enhancing effect of zeolite 5A can be explained by an ion exchange reaction between tin ions from SnCl₂.2H₂O and calcium ions from the zeolite 5A. The modification was performed by forming a zeolite 5A slurry in water and dissolving SnCl₂.2H₂O in to it. After 2 days of stirring the mixture at room temperature, a yellow solid was recovered via filtration and subsequently dried by the treatment used for obtaining the activated zeolite.

The yellow solid was added in Example 13, where it is referred to as modified zeolite. Example 12 also excludes SnCl₂.2H₂O, and omits any form of zeolite. A comparison of the rheometer data shows that the curing behavior of Example 12 and Example 13 are similar, indicating the absence of any ion exchange between the SnCl₂.2H₂O and the zeolite, as demonstrated by comparing the results of Comparative Experiment O with Example 11.

Comparative Experiment P shows an EP(D)M based compound that does not use zeolite 5A. Example 14 uses activated zeolite 5A.

Example 15 uses zeolite 5A (referred to as "damp zeolite 5A") that was exposed to ambient laboratory conditions for a period of two weeks. A comparison of the rheometer data shows that the use of damp zeolite 5A causes a large retardation of cure behavior with a significant reduction in ΔS and large increases in ts2 and t'c(90). The rheometer data from Example 14 where "activated" zeolite is used shows an opposite effect with an increase to ΔS and decreases to both ts2 and t'c(90).

**Table 7**

| Example / Comp. Experiment | | Comp. H | Comp. I | Example 4 | Example 5 |
|---|---|---|---|---|---|
| Lanxess Butyl 301 | | 95 | | 95 | |
| Chlorobutyl (CIIR 1066) | | | 100 | | 100 |
| WRT Polychloroprene | | 5 | | 5 | |
| Carbon black | | 60 | 60 | 60 | 60 |
| Activated Zeolite 5A | | | | 10 | 10 |
| Castor oil | | 4 | 4 | 4 | 4 |
| Paraffin wax | | 1 | 1 | 1 | 1 |
| Resin SP-1045 | | 10 | 10 | 10 | 10 |
| ZnO | | 5 | 5 | 5 | 5 |
| Stearic Acid | | 1 | 1 | 1 | 1 |
| *Total lab* | *phr* | *181* | *181* | *191* | *191* |

**Table 8**

| Rheometer (MDR2000E) | | Comp. H | Comp. I | Example 4 | Example 5 |
|---|---|---|---|---|---|
| Test temp. | [°C] | 20 | 20 | 20 | 20 |
| Test time | [min] | 180 | 180 | 180 | 180 |
| ML | [dNm] | 0.96 | 2.13 | 1.29 | 2.71 |
| MH | [dNm] | 6.11 | 12.76 | 11.4 | 14.43 |
| ΔS | [dNm] | 5.15 | 10.63 | 10.11 | 11.72 |
| ts2 | [min] | 9.98 | 0.64 | 2.69 | 0.36 |
| t'c(90) | [min] | 18.37 | 2.32 | 13.78 | 1.15 |

**Table 9**

| Example / Comp. Experiment | | Comp. J | Comp. K | Example 6 | Example 7 |
|---|---|---|---|---|---|
| Natural rubber TSR 10 | | 95 | | 95 | |
| SBR 1500 | | | 95 | | 95 |
| WRT Polychloroprene | | 5 | 5 | 5 | 5 |
| Carbon black | | 60 | 60 | 60 | 60 |
| Activated Zeolite 5A | | | | 10 | 10 |
| Naphthenic oil | | 20 | 20 | 20 | 20 |
| Paraffin wax | | 2 | 2 | 2 | 2 |
| Microcrystalline wax | | | 2 | | 2 |
| Phenolic antioxidant | | 2 | | 2 | |
| Resin SP-1045 | | 10 | 10 | 10 | 10 |
| ZnO | | 5 | 5 | 5 | 5 |
| Stearic acid | | 2 | 2 | 2 | 2 |
| *Total lab* | *phr* | *201* | *201* | *211* | *211* |

**Table 10**

| Rheometer (MDR2000E) | | Comp. J | Comp. K | Example 6 | Example 7 |
|---|---|---|---|---|---|
| Test temp. | [°C] | 20 | 20 | 20 | 20 |
| Test time | [min] | 180 | 180 | 180 | 180 |
| ML | [dNm] | 0.77 | 0.9 | 0.66 | 0.97 |
| MH | [dNm] | 11.76 | 12 | 14.68 | 15.75 |
| ΔS | [dNm] | 10.99 | 11.1 | 14.02 | 14.78 |
| ts2 | [min] | 1.67 | 3.39 | 0.97 | 2.33 |
| t'c(90) | [min] | 13.53 | 15.95 | 9.25 | 12.81 |

**Table 11**

| Example / Comp. Experiment | | Comp. L | Comp. M | Example 8 | Example 9 |
|---|---|---|---|---|---|
| Therban 3467 (HNBR) | | 100 | | 100 | |
| Perbunan 3445F (NBR) | | | 100 | | 100 |
| Carbon black | | 50 | 50 | 50 | 50 |
| Activated Zeolite 5A | | | | 10 | 10 |
| DOA (dioctyladipate) | | 5 | 5 | 5 | 5 |
| Resin SP-1045 | | 7.5 | 7.5 | 7.5 | 7.5 |
| ZnO | | 2 | 2 | 2 | 2 |
| Stearic acid | | 1 | 1 | 1 | 1 |
| SnCl₂.2H₂O | | 1.5 | 1.5 | 1.5 | 1.5 |
| *Total lab* | *phr* | *167* | *167* | *177* | *177* |

**Table 12**

| Rheometer (MDR2000E) | | Comp. L | Comp. M | Example 8 | Example 9 |
|---|---|---|---|---|---|
| Test temp. | [°C] | 20 | 20 | 20 | 20 |
| Test time | [min] | 180 | 180 | 180 | 180 |
| ML | [dNm] | 1.43 | 1.68 | 1.44 | 1.61 |
| MH | [dNm] | 24.02 | 20.22 | 25.6 | 21.25 |
| ΔS | [dNm] | 22.59 | 18.54 | 24.16 | 19.64 |
| ts2 | [min] | 0.86 | 0.67 | 0.56 | 0.5 |
| t'c(90) | [min] | 9.27 | 10.69 | 7.99 | 10.1 |

**Table 13**

| Example / Comp. Experiment | | Comp. N | Example 10 |
|---|---|---|---|
| Baypren 210 (CR) | | 100 | 100 |
| Carbon black | | 50 | 50 |
| Activated Zeolite 5A | | | 10 |
| Naphthenic Oil | | 5 | 5 |
| Resin SP-1045 | | 7.5 | 7.5 |
| ZnO | | 2 | 2 |
| Stearic acid | | 1 | 1 |
| *Total lab* | *phr* | *165.5* | *175.5* |

**Table 14**

| Rheometer (MDR2000E) | | Comp. N | Example 10 |
|---|---|---|---|
| Test temp. | [°C] | 20 | 20 |
| Test time | [min] | 180 | 180 |
| ML | [dNm] | 2.89 | 2.45 |
| MH | [dNm] | 29.98 | 32.47 |
| ΔS | [dNm] | 27.09 | 30.02 |
| ts2 | [min] | 0.53 | 0.6 |
| t'c(90) | [min] | 7.74 | 2.91 |

**Table 15**

| Example / Comp. Experiment | | Comp. O | Example 11 | Example 12 | Example 13 |
|---|---|---|---|---|---|
| EPDM Keltan 8340A | | 100 | 100 | 100 | 100 |
| Carbon black | | 70 | 70 | 70 | 70 |
| White filler | | 30 | 30 | 30 | 30 |
| Mineral oil | | 65 | 65 | 65 | 65 |
| Activated Zeolite 5A | | | 10 | | |
| Modified zeolite 5A | | | | | 10 |
| Resin SP-1045 | | 10 | 10 | 10 | 10 |
| ZnO | | 2 | 2 | 2 | 2 |
| Stearic acid | | 2 | 2 | 2 | 2 |
| SnCl₂.2H₂O | | 1.5 | 1.5 | | |
| *Total lab* | *phr* | | | | |

**Table 16**

| Rheometer (MDR2000E) | | Comp. O | Example 11 | Example 12 | Example 13 |
|---|---|---|---|---|---|
| Test temp. | [°C] | 20 | 20 | 20 | 20 |
| Test time | [min] | 180 | 180 | 180 | 180 |
| ML | [dNm] | 0.8 | 1.08 | 0.78 | 0.59 |
| MH | [dNm] | 12 | 14.78 | 5.03 | 4.29 |
| ΔS | [dNm] | 11.2 | 13.7 | 4.24 | 3.7 |
| ts2 | [min] | 1.25 | 0.36 | 9.76 | 10.01 |
| t'c(90) | [min] | 12.46 | 4.88 | 17.71 | 17.54 |

**Table 17**

| Example / Comp. Experiment | | Comp. P | Example 14 | Example 15 |
|---|---|---|---|---|
| EPDM Keltan 8340A | | 100 | 100 | 100 |
| Carbon black | | 70 | 70 | 70 |
| White filler | | 30 | 30 | 30 |
| Mineral oil | | 85 | 85 | 85 |
| Activated Zeolite 5A | | | 10 | |
| Damp zeolite 5A | | | | 10 |
| PE wax | | 4 | 4 | 4 |
| Resin SP-1045 | | 10 | 10 | 10 |
| Stearic acid | | 1 | 1 | 1 |
| SnCl₂.2H₂O | | 1.5 | 1.5 | 1.5 |
| *Total lab* | *phr* | *301.5* | *311.5* | *311.5* |

**Table 18**

| Rheometer (MDR2000E) | | Comp. P | Example 14 | Example 15 |
|---|---|---|---|---|
| Test temp. | [°C] | 20 | 20 | 20 |
| Test time | [min] | 180 | 180 | 180 |
| ML | [dNm] | 0.99 | 0.9 | 0.57 |
| MH | [dNm] | 10.53 | 10.94 | 3.74 |
| ΔS | [dNm] | 9.54 | 10.04 | 3.17 |
| ts2 | [min] | 0.35 | 0.29 | 8.74 |
| t'c(90) | [min] | 7.91 | 2.23 | 16.38 |

## Claims

1. A vulcanizable rubber composition comprising
an elastomeric polymer,
a phenol formaldehyde resin cross-linker, and
an activator package
**characterized in that** the vulcanizable rubber composition comprises an activated zeolite.

2. The vulcanizable rubber composition according to claim 1 **characterized in that** the elastomeric polymer is NR, BR, NBR, HNBR, SIBR, IIR, CR, EPDM, CM, CSM, CIIR, BIIR or IR or a mixture thereof.

3. The vulcanizable rubber composition according to claim 1 or 2

4. The vulcanizable rubber composition according to any of the claims 1 to 3 **characterized in that** the activator package comprises a metal halide.

5. The vulcanizable rubber composition according to any of the claims 1 to 3 **characterized in that** the activator package comprises a halogenated organic compound.

6. The vulcanizable rubber composition according to any of the claims 1 to 3 **characterized in that** the phenol formaldehyde resin is halogenated.

7. The vulcanizable rubber composition according to any of the claims 1 to 6 oxide.

8. The vulcanizable rubber composition according to any of the claims 1 to 7 further comprising at least one compound selected from the group consisting of processing aid, blowing agent, filler, softening agent and stabilizer or a combination thereof.

9. The vulcanizable rubber composition according to claim 1 comprising at least one polymer other than the elastomeric polymer selected from the group consisting of polyethylene, polypropylene, acrylic polymer, polyvinyl chloride, ethylene-vinyl acetate copolymers, polyvinyl acetate, polyamide, polyester, chlorinated polyethylene, urethane polymers, styrene polymers, silicone polymers, and epoxy resins.

10. A process for the manufacture of a vulcanized article comprising the steps of preparing a vulcanizable rubber composition according to any of the claims 1-9, shaping the vulcanizable rubber composition and vulcanizing the shaped rubber composition.

11. The process according to claim 10 **characterized in that** the shaped rubber composition is prepared by extrusion, calendaring, compression molding, transfer molding, injection molding or combination thereof.

12. The process according to the claims 10 and 11 **characterized in that** the vulcanization is performed.

13. A vulcanized article made by a process according to any of the claims 10 to 12.

## Patentansprüche

1. Vulkanisierbare Kautschukzusammensetzung, umfassend
ein elastomeres Polymer,
einen Phenol-Formaldehyd-Harz-Vernetzer und
ein Aktivatorpaket,
**dadurch gekennzeichnet, dass** die vulkanisierbare Kautschukzusammensetzung einen aktivierten Zeolith umfasst.

2. Vulkanisierbare Kautschukzusammensetzung nach Anspruch 1, **dadurch gekennzeichnet, dass** es sich bei dem elastomeren Polymer um NR, BR, NBR, HNBR, SIBR, IIR, CR, EPDM, CM, CSM, CIIR, BIIR oder IR oder eine Mischung davon handelt.

3. Vulkanisierbare Kautschukzusammensetzung nach Anspruch 1 oder 2, **dadurch gekennzeichnet, dass** das elastomere Polymer 1,1-disubstituierte oder 1,1,2-trisubstituierte Kohlenstoff-KohlenstoffDoppelbindungen umfasst.

4. Vulkanisierbare Kautschukzusammensetzung nach einem der Ansprüche 1 bis 3, **dadurch gekennzeichnet, dass** das Aktivatorpaket ein Metallhalogenid umfasst.

5. Vulkanisierbare Kautschukzusammensetzung nach einem der Ansprüche 1 bis 3, **dadurch gekennzeichnet, dass** das Aktivatorpaket eine halogenierte organische Verbindung umfasst.

6. Vulkanisierbare Kautschukzusammensetzung nach einem der Ansprüche 1 bis 3, **dadurch gekennzeichnet, dass** das Phenol-Formaldehyd-Harz halogeniert ist.

7. Vulkanisierbare Kautschukzusammensetzung nach einem der Ansprüche 1 bis 6, **dadurch gekennzeichnet, dass** das Aktivatorpaket ferner ein Schwermetalloxid umfasst.

8. Vulkanisierbare Kautschukzusammensetzung nach einem der Ansprüche 1 bis 7, ferner umfassend mindestens eine Verbindung aus der Gruppe bestehend aus Verarbeitungshilfsmitteln, Treibmitteln, Füllstoffen, Weichmachern und Stabilisatoren oder eine Kombination davon.

9. Vulkanisierbare Kautschukzusammensetzung nach Anspruch 1, umfassend mindestens ein Polymer, das von dem elastomeren Polymer verschieden ist, ausgewählt aus der Gruppe bestehend aus Polyethylen, Polypropylen, Acrylpolymer, Polyvinylchlorid, Ethylen-Vinylacetat-Copolymeren, Polyvinylacetat, Polyamid, Polyester, chloriertem Polyethylen, Urethanpolymeren, Styrolpolymeren, Silikonpolymeren und Epoxidharzen.

10. Verfahren zur Herstellung eines vulkanisierten Gegenstands, bei dem man eine vulkanisierbare Kautschukzusammensetzung nach einem der Ansprüche 1-9 herstellt, die vulkanisierbare Kautschukzusammensetzung formt und die geformte Kautschukzusammensetzung vulkanisiert.

11. Verfahren nach Anspruch 10, **dadurch gekennzeichnet, dass** die geformte Kautschukzusammensetzung durch Extrusion, Kalandrieren, Formpressen, Spritzpressen, Spritzgießen oder eine Kombination davon hergestellt wird.

12. Verfahren nach den Ansprüchen 10 und 11, **dadurch gekennzeichnet, dass** die Vulkanisation durchgeführt wird.

13. Vulkanisierter Gegenstand, hergestellt durch ein Verfahren nach einem der Ansprüche 10 bis 12.

## Revendications

1. Composition de caoutchouc vulcanisable comprenant
un polymère élastomère,
un agent de réticulation résine phénol-formaldéhyde et
une préformulation d'activateurs
**caractérisée en ce que** la composition de caoutchouc vulcanisable comprend une zéolite activée.

2. Composition de caoutchouc vulcanisable selon la revendication 1 **caractérisée en ce que** le polymère élastomère est du NR, BR, NBR, HNBR, SIBR, IIR, CR, EPDM, CM, CSM, CIIR, BIIR ou IR ou un mélange de ceux-ci.

3. Composition de caoutchouc vulcanisable selon la revendication 1 ou 2 **caractérisée en ce que** le polymère élastomère comprend des doubles liaisons carbone-carbone 1,1-disubstituées ou 1,1,2-trisubstituées.

4. Composition de caoutchouc vulcanisable selon l'une quelconque des revendications 1 à 3 **caractérisée en ce que** la préformulation d'activateurs comprend un halogénure métallique.

5. Composition de caoutchouc vulcanisable selon l'une quelconque des revendications 1 à 3 **caractérisée en ce que** la préformulation d'activateurs comprend un composé organique halogéné.

6. Composition de caoutchouc vulcanisable selon l'une quelconque des revendications 1 à 3 caractérisée en ce la résine phénol-formaldéhyde est halogénée.

7. Composition de caoutchouc vulcanisable selon l'une quelconque des revendications 1 à 6 **caractérisée en ce que** la préformulation d'activateurs comprend en outre un oxyde de métal lourd.

8. Composition de caoutchouc vulcanisable selon l'une quelconque des revendications 1 à 7 comprenant en outre au moins un composé choisi dans le groupe constitué par un adjuvant de fabrication, un agent gonflant, une matière de charge, un plastifiant et un stabilisant ou une association de ceux-ci.

9. Composition de caoutchouc vulcanisable selon la revendication 1 comprenant au moins un polymère autre que le polymère élastomère choisi dans le groupe constitué par le polyéthylène, le polypropylène, le polymère acrylique, le poly(chlorure de vinyle), les copolymère d'éthylène-acétate de vinyle, le poly(acétate de vinyle), le polyamide, le polyester, le polyéthylène chloré, les polymères d'uréthane, les polymères de styrène, les polymères silicones et les résines époxydes.

10. Procédé pour la fabrication d'un article vulcanisé comprenant les étapes consistant à préparer une composition de caoutchouc vulcanisable selon l'une quelconque des revendications 1-9, mettre en forme la composition de caoutchouc vulcanisable et vulcaniser la composition de caoutchouc mise en forme.

11. Procédé selon la revendication 10 **caractérisé en ce que** la composition de caoutchouc mise en forme est préparée par extrusion, calandrage, moulage par compression, moulage par transfert, moulage par injection ou une association de ceux-ci.

12. Procédé selon les revendications 10 et 11 **caractérisé en ce que** la vulcanisation est effectuée.

13. Article vulcanisé formé par un procédé selon l'une quelconque des revendications 10 à 12.
